# EUROPEAN PATENT SPECIFICATION

(11) **EP 3 138 416 B1**
(45) Date of publication and mention of the grant of the patent: **14.10.2020**
(21) Application number: 14828488.8
(22) Date of filing: 28.11.2014
(51) Int. Cl.: A23N 5/00, A23N 5/01, A23N 15/10, B02B 3/00

(54) **PROCEDURE FOR SEPARATING THE HUSK OF SEEDS OR FRUIT, SCREENING DEVICE AND SELECTION DEVICE**
VORRICHTUNG ZUR ENTFERNUNG DER SCHALE VON SÄMEREIEN ODER FRÜCHTEN, SIEBVORRICHTUNG UND SORTIERER
PROCEDE POUR LA SEPARATION DES COQUES DES SEMANCES OU FRUITS, DISPOSITIF DE TAMISSAGE ET DISPOSITIF DE SEPARATION

(30) Priority: 02.05.2014 ES 201430642
(43) Date of publication of application: 08.03.2017
(73) Proprietor: Inno Almond Fly S.L., Lleida (ES)
(72) Inventor: LA CAGNINA, Salvatore, 93016 Riesi (IT)
(74) Representative: Manresa Val, Manuel
(86) International application number: PCT/ES2014/070877
(87) International publication number: WO 2015/166116

(56) References cited:
- FR-A- 604 861
- FR-A1- 2 638 947
- GB-A- 388 486
- US-A- 3 080 905
- US-A- 4 504 505

## Description

Procedure for separating the husk of seeds or fruit, screening device and selection device of the type comprising: a first stage wherein the seeds or fruit are fed into a splitting machine, that hits said husk of the seeds or fruit breaking it, characterised in that it comprises: a second stage wherein said split seed or fruit husk is transported into at least one first rotary screen or rotary, being tubular screen, with walls having perforations with basic V-shape or modifications thereto for passing the husk-less seed or fruit and retaining the seeds and fruits with husks and the non-split seeds and fruit inside the rotary screen, a third stage wherein the said first rotary screen, rotates, moving the products inside it, with some of said products passing through said V-shape perforations or a combination thereof, falling in some collection means, and a fourth stage wherein the husks, the fruit and the seeds that have separated from the husk and the fruit and seeds with husks are transported from the collection means to at least one device comprising a slope along which said products fall, with said slope ending in a curve with a corrugated area and a point of inflection that guides it upwards to a ramp where said products take off, with said husk-less seeds or fruit falling in respective classifying elements on one side, the seeds or fruits with husks on the other and the loose husks on another based on the friction coefficient of said products with the corrugated area.

### BACKGROUND TO THE INVENTION

In the state of the art different procedures and machines are known that separate the seed husk in dried fruit.

In the state of the art Utility Model ES1602627 MAQUINA EXTRACTORA-SEPARADORA DE PALOS U OTROS ELEMENTOS DE DESECHO" (Extraction-separating machine for stalks or other waste elements), in the name of JOSE BORRELL, S.A., which relates to an extraction-separating machine for stalks or other waste elements, particularly for separating a certain fruit, such as almonds or others of a similar nature, with respect to the stalks, branches, stones or other strange elements that accompany the fruit when it is harvested, characterised in that it comprises a frame at each end of which it incorporates a transverse axis with each transverse axis having a toothed wheel on each side each associated to one of the ends thereof, with the wheels of one same side being coplanar and mutually aligned with one another, extending between the toothed wheels on each side a chain which is susceptible to movement by virtue of the movement transmitted by the rotation produced by a geared motor unit in one of said transverse axes, and both chains including, in equidistant positions with respect to the inner faces thereof, a plurality of bearings coupled with transverse bars that can turn with respect to their axis, each of which including a plurality of orthogonal, equidistant rods along its length, and with said rods being of a length such that when they move across the top plane, they rest due to gravity on the transverse bar immediately behind according to the direction of movement, determining sufficient apertures to let the fruit fall towards a bottom collection hopper, but retaining the stalks and other strange elements, and moving to a vertical position due to gravity after passing the machine exit end, thanks to the rotation of the bars, favouring the fall of the entrained waste elements.

Also Spanish Patent No. ES2127070 "MAQUINA LIMPIADORA DE CUERPOS EXTRAÑOS PARA ALMENDRAS Y OTROS FRUTOS SECOS" (Machine for cleaning foreign bodies for almonds and other dried fruit) is known, in the name of Mr. Jose BORRELL COLLADO, which relates to an almond cleaning machine, provided with a framework, with the top area for the product entry, supported by the sides, with a screen at the bottom, for soil to fall onto a lower ramp that communicates with the duct outside, and the almonds falling along the ramp inside the separator, the bottom of which is made up of the special characteristics screen, adopting a tilted upflow plane and cushion of air, produced by the turbine, in which axis, the assembled transmission is provided from the drive motor, producing pressurised air within the area, with the stones and strange objects rising and falling through the adjustable flap and the clean almonds along the previous ramp, with the turbine taking the air, through the side nozzles, with the separator working, via the motor, pulleys, transmission to the pulley, applied to the part, for movement, with springs for the separator function.

It is worth mentioning a patent in the olive sector, but whose machinery could be highlighted as Spanish Patent No. ES2003018 "MÁQUINA LIMPIADORA DE ACEITUNAS MEJORADA" (Improved olive cleaning machine), in the name of Mr. Ildefonso ROSA RAMIREZ, which describes an olive cleaning machine, intended for separating and removing the waste accompanying said fruit and which is provided, essentially, with a framework that has an olive supply hopper and respective trays for the falling impurities. The cleaning machine comprises essentially respective vibratory separators that move simultaneously with the trays for the falling impurities and which are fixed to the machine framework by corresponding crankpins, respective turbofans for expelling waste with separate force transmission mechanisms, which provide movement to said turbofans through a series of pulleys with corresponding belts and an air baffle arranged near the fruit exit nozzle with an alternating movement and arranged with a variable and critical tilt.

From INDUSTRIAS JUAN BUSQUETS CRUSAT, S.A. there is Spanish Patent No. ES2069457 "MÁQUINA SEPARADORA DE CASCARA DEL GRANO DE ALMENDRA, FRUTOS SECOS Y GRANOS SIMILARES " (Machine for separating the husk from the almond kernel, dried fruit and similar seeds), which relates to a machine that is made up of a tray in a tilted arrangement with a slope towards the exit, there being a raised end section of such tray and a higher one from its front or top edge to its rear or lower exit edge; there being arranged in correspondence with the fruit reception area some air outlet holes for turning the husks, while in correspondence with the higher side edge a duct has been provided with a plurality of elongated slots in the transverse direction, through which air is projected that separates the husks from the seeds, with the husks exiting through an exit mouth away from the exit mouth for the clean seed; said tray is assembled via its front edge on a frame that is supported via elastic supports on a second frame made up of the general framework, with an adjustable vibrator being arranged on the first frame.

It is worth mentioning Spanish Utility Model No. 1011082 "CRIBA SELECCIONADORA ROTATORIA DE DESCARGA LIBRE ADAPTADA A MAQUINAS RECOLECTORAS DE FRUTA SECA DEL TERRENO" (Selective, rotary screen with free discharge adapted to harvesting machines for dried fruit from the land), in the name of TONUTTI, SPA, which describes a selective, rotary screen with free discharge adapted to harvesting machines for dried fruit from the land, characterised by the fact that it is made up of two coaxial cylinder-sieves, joined to one another and arranged horizontally, there being on each inner side surface thereof at least one helicoidal rib for facilitating the advance of the harvested material, which is introduced through the base of the innermost cylinder-sieve and expelled through the opposite base as waste, while the fruit is expelled in the same direction, but from the outer cylinder-sieve, which has at least two circumferential outer notches separate from one another, preferably trapezoidal, inside which some pulleys move, some intended to support the whole screening and one at least located opposite the former, with an appropriate spring adjustable transmission intended to transmit the rotary movement to the screen: when the latter is rotated, with a double coaxial sieve and the harvested material is inserted through the base of the innermost sieve, the product is driven over the respective side walls and, once selected, it is pushed towards the discharge on the side opposite the entrance.

Additionally, French patent FR604861 "MACHINE POUR SEPARER L'AMANDE DE SON NOYAU" from 1925 describes a machine for separating the kernel from the fine comprising a series of devices producing a continuous series of classifications, obtained by means of several sieves specially arranged. Method of producing comprising the stages of: the mixture of the kernel and the kernel leaving by the crushing machine is collected by a hopper which pours it into a first sieve formed of parallel hoops, spaced from each other adequately to release the mixture of the dust and the small core particles contained therein, the mixture then passing into another sieve consisting of a metal plate provided with orifices whose size is related to the size of the almond; the mixture collected previously arrives in a third sieve constructed of corrugated iron wires which are separated from each other by a distance proportional to the size of the core, which engages between these iron wires and is then expelled inside, thus separating from the kernel and certain fragments of pitch eliminated by the iron wires.

The invention of US Patent US3,080.905 "METHOD FOR DECORATICATING SAFFLOWER SEED" from 1959, comprises introducing the safflower seeds into a stream of rapidly moving air, speeding up the velocity of the entrained seeds solely by the airstream, and then impinging the seeds at a critical velocity level against a planar target so as to crack them by impact. The system of screening of the hull and meat is arranged as a series of novel trommels having different mesh screen.

The document FR2638974 "DISPOSITIF D'EXTRACTION D'UNE AMANDE D'UN FRUIT À COQUE ET CHAINE ASSOCIEE" from 1988 refers to a device for extracting an almond from a shelled fruit under the effect of shock applied to the shell without the kernel being subjected to a deformation, as well as the sorting of almonds and shell breakage obtained. It comprises means for projecting the fruit at high speed and means for sorting the kernel and hull breakage. The sorting means comprise means for simultaneous projection of the shell fragments and the kernel, a mobile conveyor belt disposed substantially perpendicular to the direction of projection, the surface of which comprises needles oriented parallel to this direction, means for recovering the crashed almonds and two conveyors.

Finally, the document GB388486 "IMPROVEMENTS IN AND RELATING TO THE EXTRACTION OF KERNELS" FROM 1933 refers to apparatus for extracting the kernels from nuts. The nuts are fed from a hopper to a grading-machine in which a single nut is raised and ejected into one of a series of trays; the graded nuts are fed on to a tray and slide down on to hollow, reciprocating plungers which shear the side edges of the nut, and the kernel and broken shell are drawn into a suction chamber, and, if the nuts are of a kind in which the kernel and shell are of different specific gravity, are sifted in an air current sifter connected to a fan chamber. If the specific gravity of the kernel and shell are similar then they are separated mechanically in a rotary sifter.

### BRIEF DESCRIPTION OF THE INVENTION UNDER APPLICATION

This invention is a development in the field of separating seeds or fruit with husks, such as for example, dried fruit, locust beans, cereals, pulses, etc., (this is not an exhaustive list as indicated later).

It is necessary to note that the list of dried fruit products with a husk, seeds, locust beans or pulses is non-limiting, because as can be seen both the procedure and both devices can be applied to a large number of agricultural products. Also, when reference is made to seeds it is to group them all under one name, unless it is clearly understood that reference is made strictly to seeds.

The inventor has developed a new procedure for separating the seed or fruit from the husk, based also on two devices that help this task.

So, at present the sector develops by improving the machinery electronics, i.e., manufacturing increasingly smarter machines that depend on electronics and this makes the product more expensive and not feasible for many small and medium businessmen.

This way, the inventor has developed a procedure and some devices that are based on mechanical means, i.e., productivity is increased, costs are reduced because the unit is much more economical, energy consumption is reduced by 50%, the emission of dust from the husks is reduced, the noise produced by the current machines is reduced by 60%, and the surface area occupied by the machine is reduced, etc., which makes this invention a substantial qualitative leap with respect to the state of the art.

Also, as the product resulting from the procedure has moved or been shifted less, there are less stages than the resulting product obtained from the state of the art procedures, its quality is better, which makes it an excellent quality product. It is particularly worth mentioning that the product is not pricked at any time, whereby the quality of the end product is much better than many of the machines offered today.

Also, the current electronic machines have to be updated or renewed every four or five years, because they become obsolete, while the current invention will hardly become obsolete because the electronic means do not directly affect the separation process.

Document ES1011082 comprises a cylindrical, rotary screen that aims to allow those products with a certain size to pass through its screen. The problem is that when screening for a certain size many small size husks can enter.

This invention solves these problems with the configuration of "V" shaped perforations or a combination thereof which allows the non-split husks or fruit to remain trapped in the curves or angles, and at the same time lets the seeds pass through.

A first objective of this invention is a procedure for separating the husk of seeds or fruit, of the type comprising: a first stage wherein the seeds or fruit are fed into a splitting machine, that hits said husk of the seeds or fruit breaking it, characterised in that it comprises: a second stage wherein said split seed or fruit husk is transported inside at least one first rotary screen or rotary, tubular screen, having walls with perforations for passing the husk-less seed or fruit and retaining the seeds and fruits with husks and the non-split seeds and fruit inside the rotary screen, a third stage wherein the said first rotary screen, rotates, moving the products inside it, and with some of said products passing through the said V-shape perforations or a combination thereof, falling in some collection means, and a fourth stage wherein the husks, the fruit and the seeds that have separated from the husk and the fruit and seeds with husks from the collection means are transported to at least one device comprising a slope along which said products fall, with said slope ending in a curve with a corrugated area and a point of inflection that guides it upwards to a ramp where said products take off, with said husk-less seeds or fruit falling in respective classifying elements on one side, the seeds or fruits with husks on the other side and the loose husks on another based on the friction coefficient of said products with respect to the corrugated area.

A further aspect of this invention is a screening device for products like seeds or fruit with husks, of the type comprising at least one rotary screen or screen, with a tubular configuration, that defines an inlet and an outlet from said rotary screen, rotation means on the transverse axis of the rotary screen, perforations in the tubular wall for passing or screening the product and collection means for the screened product, characterised in that the said perforations have a V-shape or combination thereof.

A second objective of this invention is a selection device for products like dried fruit with husks, seeds or pulses, of the type comprising a slope where the husk-less seeds, the seeds with husks and husks fall, characterised in that it comprises: a curve at the end of the slope comprising: a point of inflection that changes direction lifting the product, and at least one corrugated area, a ramp where the said products jump, and some classifying means that classify the products that jump from the ramp.

### BRIEF DESCRIPTION OF THE DRAWINGS

In order to facilitate the explanation, this specification is accompanied by ten sheets of drawings wherein a practical embodiment has been represented, which is quoted as a non-limiting example of the scope of this invention:
- Figure 1 is a perspective view of a screening device,
- Figures 1b and 1c are respective details of the mesh of said device,
- Figure 2 is an elevation view of Figure 1 without the mesh with the perforations,
- Figure 3 is a cross-section of Figure 1,
- Figure 4 is a partially broken down detail of one of the rotary screens,
- Figure 5 is a perspective view of the selection device,
- Figure 6 is a cross-section of the selection device,
- Figure 7 is a cross-section of the selection device with the fan-shape classifiers,
- Figure 8 is a partial view of Figure 6 but with two selection devices,
- Figure 9 is a rear partial view of the slope, and
- Figure 10 is a detail of the slope supply device.

### SPECIFIC EMBODIMENT OF THIS INVENTION

First of all it is necessary to note that the list of dried fruit products with husks like almonds, hazelnuts, walnuts, pistachios, macadamia nuts, Brazil nuts, etc.; seeds of every kind like cereals, sunflower, apricot seeds, etc.; locust beans; or pulses of every kind, is non-limiting because as can be seen both the procedure and both devices can be applied to a large number of agricultural products.

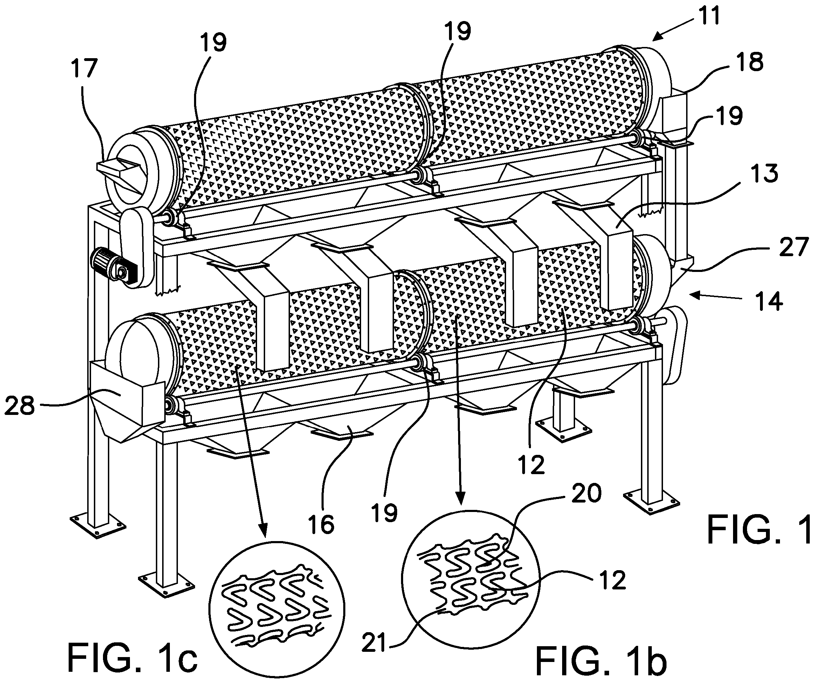

Figure 1 shows a first rotary screen 11, with its rotation means 19, an inlet 17, an outlet 18, collection means 13, a second rotary screen 14, an inlet 27, an outlet 28, rotation means 19 and its collection means 16.

Figures 1b and 1c represent a mesh 21, the perforations 12 and some inner projections 20.

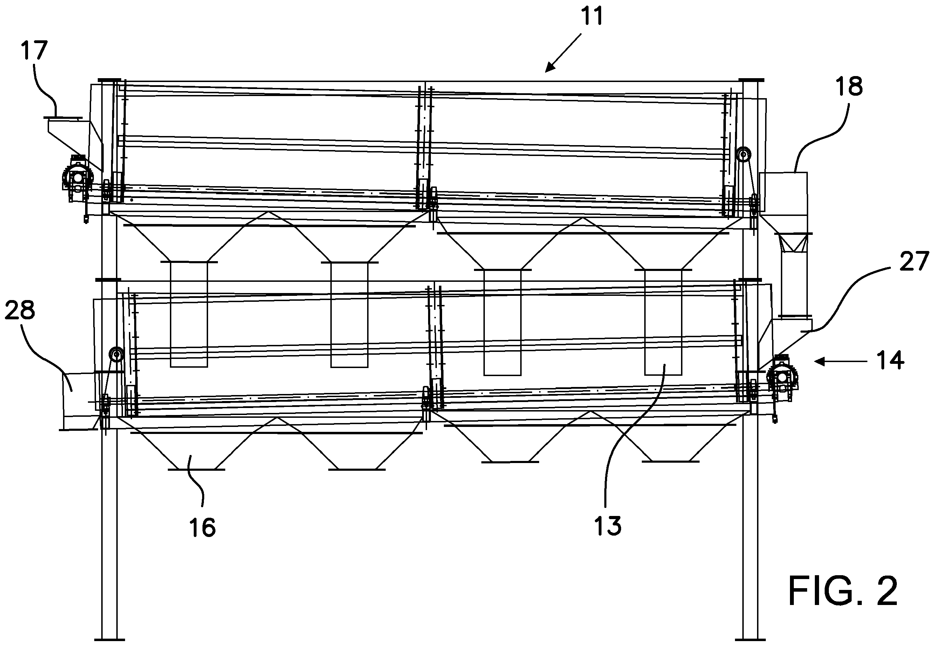

Figure 2 illustrates the first rotary screen 11, its inlet 17, its exit 18, the collection means 13, the second rotary screen 14, its inlet 27, its exit 28 and its collection means 16.

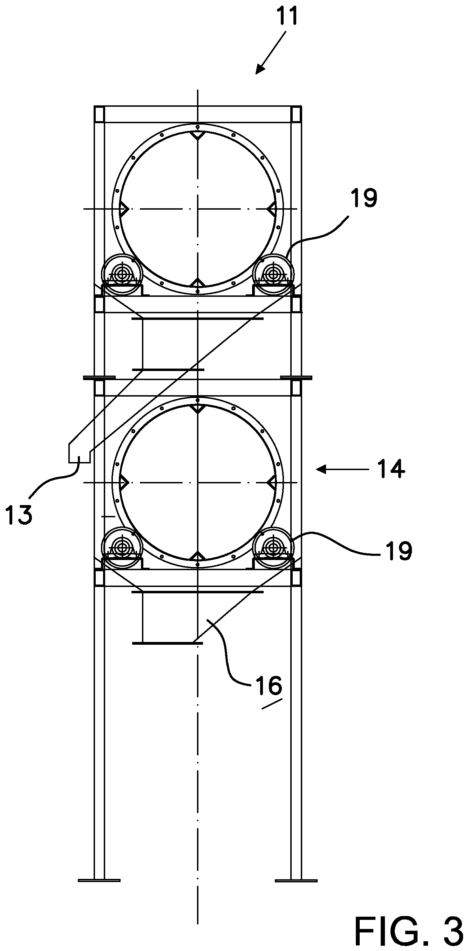

Figure 3 illustrates the first rotary screen 11, its rotation means 19, the collection means 13, the second rotary screen with its rotation means 19 and the collection means 16.

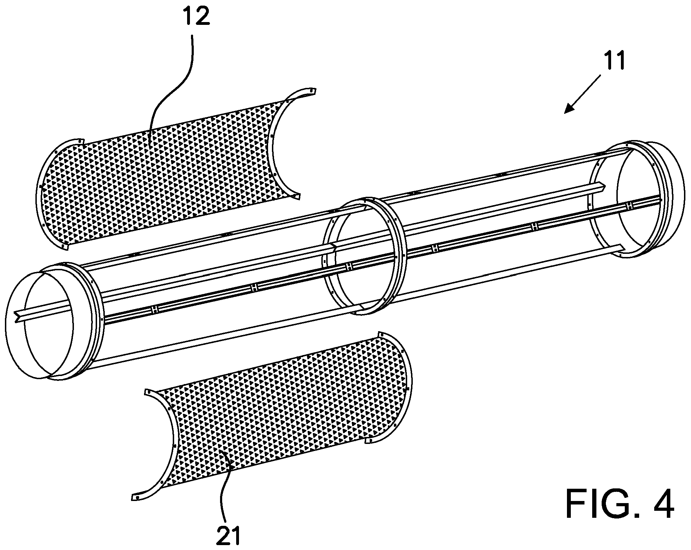

Figure 4 shows the first rotary screen 11 with the perforations 12 in a mesh 21.

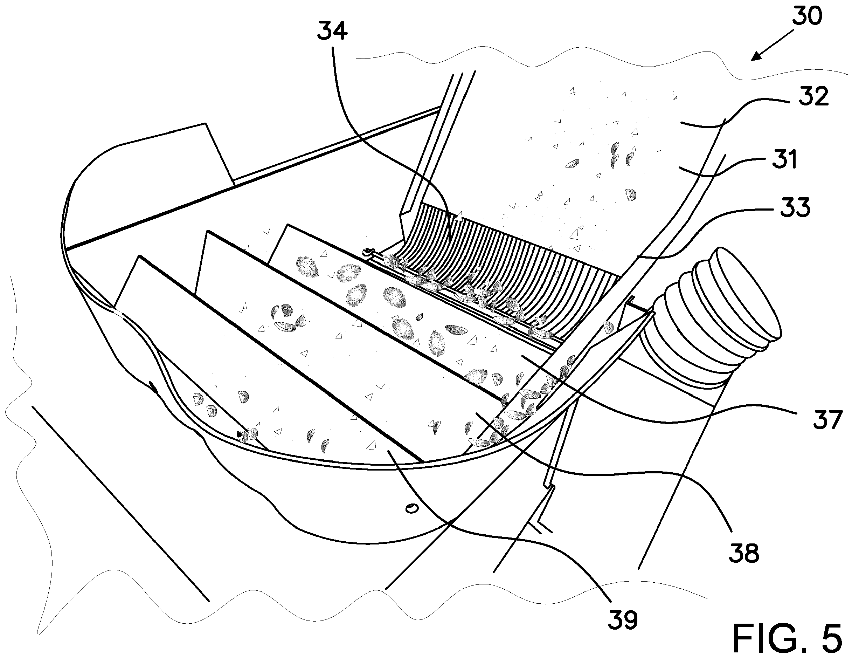

Figure 5 shows a selection device 30, a slope 31, products 32, a curve 33, a corrugated area 34 and classifying means 37, 38, 39.

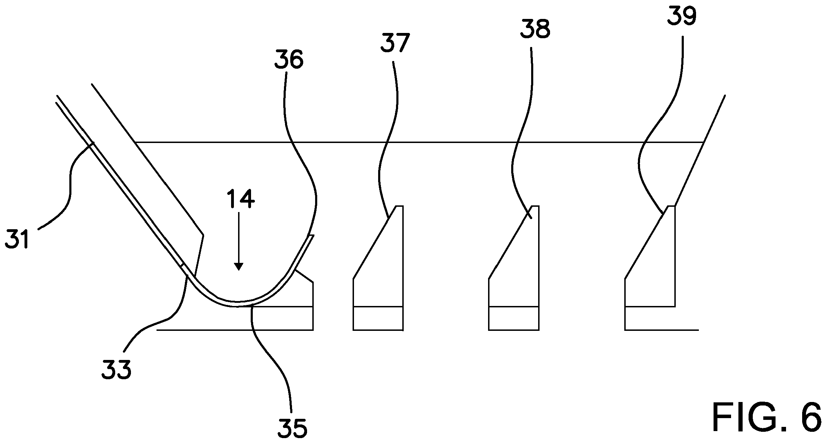

Figure 6 shows the slope 31, the curve 33 with its point of inflection 35, the corrugated area 34, a ramp 36 and the classifying means 37, 38, 39.

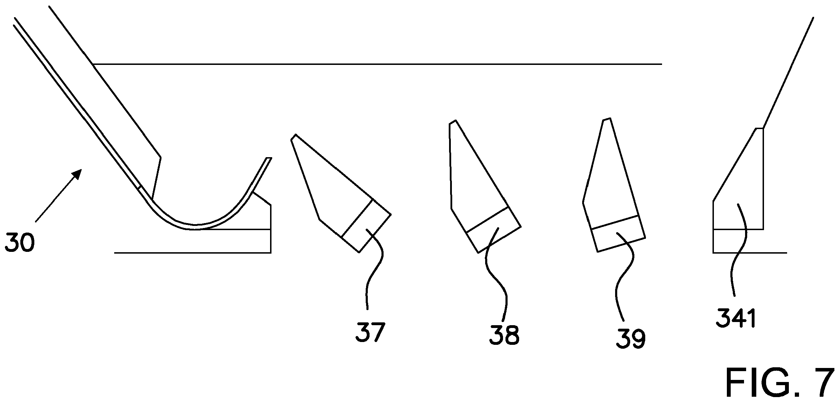

Figure 7 shows the selection device 30, the classifying means 37, 38, 39, 341.

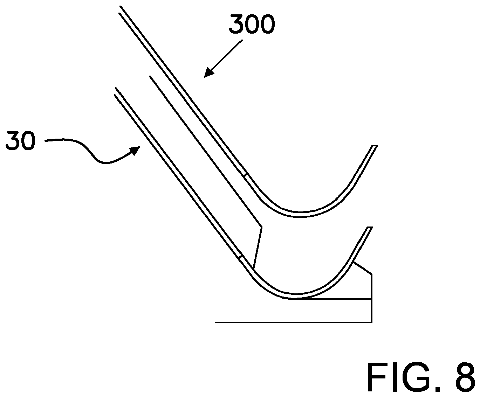

Figure 8 shows the selection device 30 and a second selection device 300.

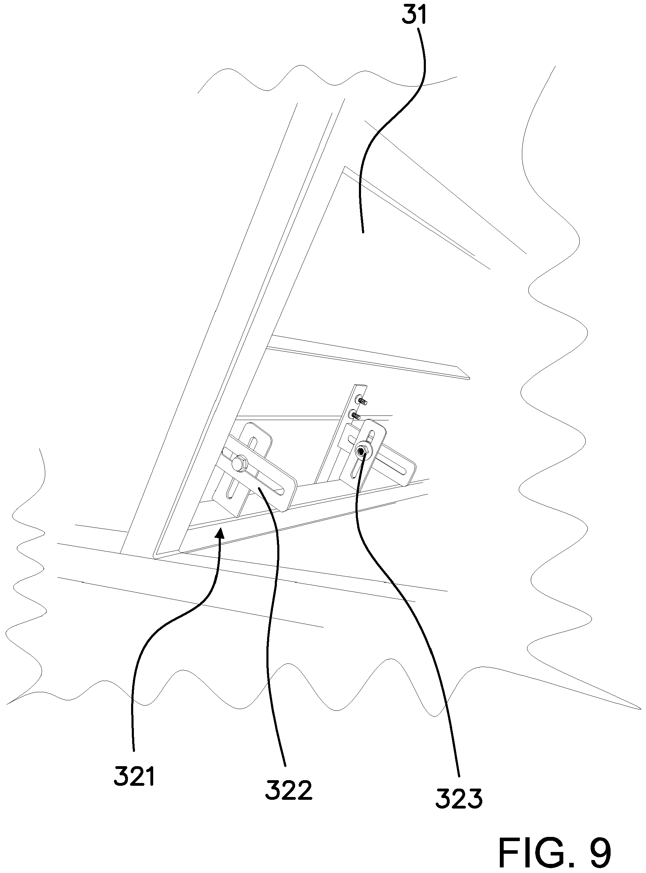

Figure 9 shows the slope 31, adjustment means 321, a splint with guide 322 and a passing system 323.

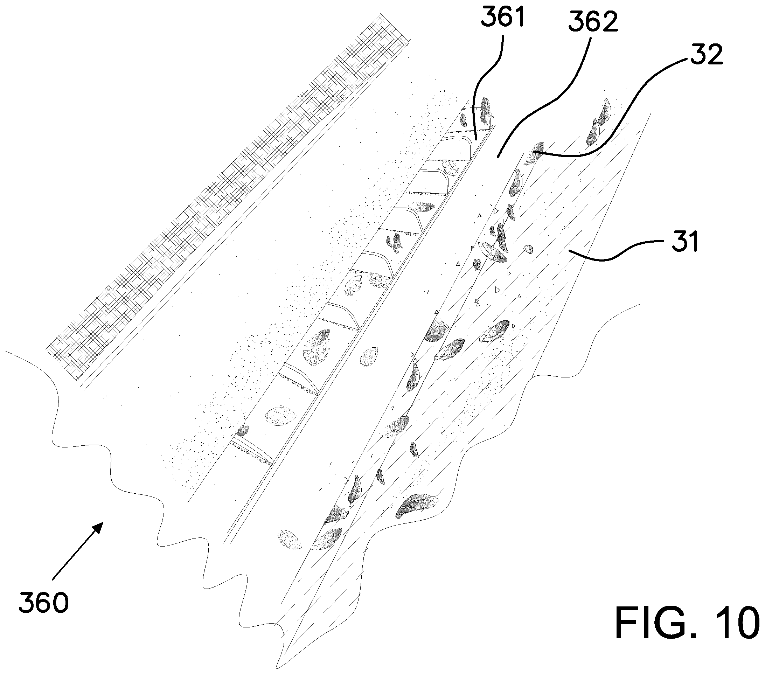

Finally, Figure 10 illustrates the slope 31, products 32, supply means 360 with its supply channels 361 and a splint 362.

So in a specific embodiment of the invention, it relates, only as an example, to dried fruits, for example almonds, but it is not limited thereto, because as mentioned earlier, it can be applied in general to seeds and fruit with husks.

The procedure for separating the husk from the seed in dried fruit comprises a first stage wherein the dried fruit is fed into a splitting machine, which hits said dried fruit husk to split it.

Also it comprises a second stage wherein said dried fruit husk is transported, most of it split, into at least one first rotary screen 11 or rotary, tubular screen. In this embodiment there are two rotary screens 11, 14, even though there could be just one or more than two, depending on requirements (type of product) and the production units assembled.

The walls of rotary screen 11 comprise perforations 12 for passing the husk-less seeds and retaining the seeds with husks and the non-split fruit inside rotary screen 11.

As can be seen in Figure 4, said perforations 12 can be made like a mesh 21, removable, this way it can be changed, repaired and cleaned.

In a third stage the said first rotary screen 11, rotates, moving the products inside it, and with said seeds passing through said perforations 12 having a basic V-shape or modifications thereto such as (as a non-limiting list) "S", "N", "W", "M", "2", "1", "L" or variations or combinations thereof, and falling in to collection means 13.

The perforations with a basic V-shape, for example in this embodiment in "S" or "N", or their mirror image, make it possible to select in one single screening up to four different sizes of dried fruit, improving up to 80% the procedures used at present.

In this specific embodiment the "N" or "S" shape is chosen, as shown in Figure 1b, although as mentioned earlier, the objective covers perforations that contain a V-shape or variations or modifications thereof, as in the list indicated two paragraphs above.

In the fourth stage, the husks that have been filtered, the fruit or seeds that have separated from the husk and the seeds with husks that have managed to pass to the collection means 13 are transported to a selection device 30 which comprises a slope 31 along which said products 32 fall, with said slope ending in a curve 33 with a corrugated area 34 and a point of inflection 35 that guides it upwards to a ramp 36 where said products 32 take off, landing in respective classifying elements 37, 38, 39 said husk-less seeds on one side, the seeds with husks on the other and the loose husks on another based on the friction coefficient of said products 32 with respect to the corrugated area 34.

This fourth stage can comprise a series of previous, intermediate stages for returning the non-split fruit to the initial splitting machine, or for screening with vibration devices so that more material without superfluous husks are delivered, etc.

So, optionally, between the third and the fourth stage there is a third intermediary stage wherein the products 32 that remain inside the first rotary screen 11 are transferred to a second rotary screen 14 with identical or similar characteristics as the first rotary screen 11, for passing the husk-less seeds and retaining the seeds with husks and the non-split fruit inside the rotary screen 14, comprising said "S" or "N" shape perforations 12.

Optionally, the rotary screens 11, 14 can be tilted towards the floor, this facilitates the advancement of the products 32 (Fig. 2).

The rotary screens 11, 14 or tubular screens in this embodiment are cylindrical, even though they could have another more quadrangular shape, for example, depending on requirements.

The screening device for products like dried fruit with husks, an objective of the invention, comprises at least one rotary screen 11 or screen, with a tubular configuration, that defines an inlet 17 and an outlet 18 of said rotary screen 11, rotation means 19 on the transverse axis of the rotary screen, perforations 12 in the tubular wall for passing or screening the product and collection means 16 for the screened product, with said V-shape perforations 12 or combinations thereof, as explained before. As in the procedure, the chosen shape is "N" or "S", even though any V-shape or modifications thereof can be used.

Said shape, and its respective mirror representations, as mentioned earlier, allow for better filtering of products 32, virtually retaining all the non-split fruit and many of the split fruit that is stuck to the seed.

Also the inventor has seen that if the inner projections 20 of the V-shape perforations are rounded the effectiveness of the perforations is greatly improved.

The inventor has tested that said V-shape figure has a husk breakage effect, which translates into splitting any half split husks, which increases the result of the first stage (split husks) by at least 30%.

This also leads to a very noticeable reduction in energy consumption, as it is not necessary to return many husks, and in the time used to obtain a certain amount of the end fruit, which leads to greater quality of said end product, as said product is in the machine for less time.

As shows in Figures 1 to 4, the device optionally can comprise a second rotary screen 14.

Said rotary screen 14 would be located under the first rotary screen 11, with transport means connecting the outlet 18 from the first rotary screen to the inlet 27 of the second rotary screen, transporting the products from inside the first rotary screen 11 to inside the second rotary screen 14, to continue the screening.

Both the first 11 and the second 14 rotary screens can have at their exit 18, 28 means for returning the product from the inside, either to another device, such as the splitting machine, or to a previous rotary screen inlet 17, 27.

To facilitate the advance movement of the products inside rotary screens 11, 14, said rotary screens are optionally tilted towards the floor.

The selection device of products like dried fruit with husks, seeds, locust beans or pulses, comprises a slope 31 along which the husk-less seeds, the seeds with husks and the husks 32 fall.

It comprises a curve 33 at the end of the slope 31 that comprises, in turn, a point of inflection 35 that changes the direction of the curve 33 lifting the products 32, and at least one corrugated area 34.

The curve 33 ends in a ramp 36 on which the said products 32 jump.

Also, the device comprises classifying means 37, 38, 39 that classify the products that jump from the ramp 36.

The corrugated area 34 allows the husk, as it has a smoother surface, when it jumps on the ramp 36, to reach greater acceleration and fly to classifiers 38, 39 further away from the ramp 36.

On the contrary, the husk-less dried fruit, has a rough skin, which means that when it comes into contact with the corrugated area 34, its acceleration is reduced due to the friction and once it abandons the ramp 36, it hardly flies, and therefore falls into the closer classifiers 37.

Depending on the type of product 32, it is possible to change the height and the angle of the ramp 36, i.e. said ramp 36 is adjustable, which gives it great versatility and adaptability.

Along the same lines, it is possible to adjust the angle of the slope 31 via adjustment means 321, for example a splint with a guide 322 and a passing system 323, thereby adjusting the acceleration of the fruit and the husks, increasing or reducing it by moving said angle (Figure 9).

Also, depending on the product 32, it is possible that both the ramp 36 and the slope 31 have extension means, to increase or reduce the speed of the product 32.

Also, to adapt to the possibilities of extensions and the different products 32, the classifying means 37, 38, 39 are movable, so that their width and position can change in the device. In other words, both the space between the classifiers 37, 38, 39, 341 can be changed and their angle, adopting a more vertical configuration as shown in Figure 6 or in the shape of a fan as shown in Figure 7.

The inventor has noticed that after the working day, it is possible that on the ramp 36 and on the curve 33, mainly, there may be some impurities, like dust or some small waste from the husks. This could affect the friction and therefore the classification of product 32 in the classifying means 37, 38, 39.

So, means have been designed for cleaning the ramp 36, which could be a brush or blower means, for example.

Also, within the different construction options for the slope 31 and the ramp 36, a sequence of different slopes 31 or ramps 36 could be built, aided by very precise air suction that would assist both the device cleaning and the distribution of the various products in their selection process.

Another construction option is the possibility of having more than one selection device for products like dried fruit with husks, seeds or pulses 30, 300, as shown in Figure 8, by placing one on top of another, so that space is optimised, and that production, this way, can be increased.

The material to use in constructing the slope 31, the curve 33 and the ramp 36 can be very diverse, although in at least one part of the section of the slope 31, curve 33 or ramp 36, in this specific embodiment, this material has to be a material with sliding, anti-friction properties. In other words, said material can be used in a section of slope 31, or of curve 33 or of ramp 36, or in two of them, or in the three, or in the whole surface or in part thereof.

Said possibilities are marked by the products 32 that are used, and their different friction properties. So different devices 30 can be available depending on the friction properties of the dried fruit, for example, if different types of almond are used, each one could have its own device 30, because not all the varieties behave the same way.

In order to make sure that the product slides down the slope 31, the inventor has developed supply means 360 for said slope 31, which allow the products to fall one by one.

So, the supply means 360 comprise supply channels 361 that supply the product to a splint 362, in this embodiment tilted, even though it could not be, separated a certain distance from the slope 31, so that said distance is enough to allow the passage of product 32 through the same place. Obviously, depending on the product 32 and if talking about almonds, the variety, said distance must vary, according to the sizes thereof, with means existing to approach or separate said tilted splint 362 from the slope 31.

The inventor, in this embodiment and without it being a limiting element, has used glass as the anti-friction sliding surface, where the products 32 slide both along the slope 31, and the curve 33 or the ramp 36, even though said material could change, depending on the product 32 used and its need to accelerate and fly.

This patent of invention describes a new procedure for separating the husk from seeds or fruit, a screening device and selection device. The examples mentioned here do not limit the invention, as it can have different applications and/or adaptations, all within the scope of the following claims.

## Claims

1. Procedure for separating the husk from seeds or fruit, of the type comprising:
- a first stage wherein the seeds or fruit are fed into a splitting machine, that hits said husk of the seeds or fruit breaking it,
**characterised in that** it comprises:
- a second stage wherein said split seed or fruit husk is transported into at least one first rotary screen (11), being tubular with walls having perforations (12) with basic V-shape or modifications thereto for passing the husk-less seed or fruit and retaining the seeds and fruits with husks and the non-split seeds and fruit inside the rotary screen (11),
- a third stage wherein the said first rotary screen (11), rotates, moving the products inside it, with some of said products passing through said perforations (12) with basic V-shape or modifications thereto, falling in some collection means (13), and
- a fourth stage wherein the husks, the fruit and the seeds that have separated from the husk and the fruit and seeds with husks from the collection means (13) are transported to at least one device (30) comprising a slope (31) along which said products (32) fall, with said slope (31) ending in a curve (33) with a corrugated area (34) and a point of inflection (35) that guides it upwards to a ramp (36) where said products (32) take off, with said husk-less seeds or fruit falling in respective classifying elements (37, 38, 39) on one side, the seeds or fruits with husks on the other and the loose husks on another based on the friction coefficient of said products (32) with the corrugated area (34).

2. Procedure, according to claim 1, **characterised in that** between the third and fourth stage there is a third intermediary stage wherein the products (32) remaining inside the first rotary screen (11) are transferred to a second rotary screen (14) being tubular with identical or similar characteristics as the first rotary screen (11), for passing husk-less seeds or fruit and retaining the seeds or fruit with husks and the husks inside the second rotary screen (14), comprising said perforations (12) with basic V-shape or modifications thereto.

3. Procedure, according to claim 1 or 2, **characterised in that** the rotary screens (11, 14) are tilted towards the floor following the advance system of the products.

4. Procedure, according to one of the preceding claims, **characterised in that** the rotary screens (11, 14) being tubular are cylindrical.

5. Device for selecting products like dried fruit with husks, seeds or pulses (30), in accordance with the procedure of claim 1, of the type comprising a slope (31) along which the husk-less seeds, the seeds with husks and the husks fall, **characterised in that** it comprises:
- a curve (33) at the end of the slope (31) comprising:
• a point of inflection (35) that changes direction lifting the products (32), and
• at least one corrugated area (34),
- a ramp (36) where the said products (32) jump
- classifying means (37, 38, 39) which classify the products (32) that jump from the ramp (36).

6. System for separating the husk from seeds or fruit which comprises the device of the claim 5 and further comprising at least one rotary screen (11) being tubular that defines an inlet (17) and an outlet (18) of said screen, rotation means (19) on the transverse axis of the screen (11) perforations (12) in the tubular wall for passing or screening the product and collection means (16) for the screened product, **characterised in that** the said perforations (12) have a basic V-shape or modifications thereto.

7. System according to claim 6, **characterised in that** the inner projections (20) of the perforations (12) with basic V-shape or modifications thereto are rounded.

8. System according to claim 6, **characterised in that** it comprises a second rotary screen (14) arranged under the first rotary screen (11) with transport means connecting the outlet (18) from the first rotary screen (11) to the inlet (27) of the second screen, transporting the products inside the first screen (11) to inside the second screen (14).

9. System according to claim 8 **characterised in that** the first (11) and the second (14) screens comprise at their exit (18, 28) means for returning the product inside, either to another device or to a previous screen inlet.

10. System according to claim 6 or 8, **characterised in that** said screens (11, 14) are tilted towards the floor according to the advance direction of the products.

11. Device, according to claim 5, **characterised in that** it comprises a second device (300), above or below the one described in claim 5.

12. Device, according to claims 5 or 11, **characterised in that** the lifting and angle of the ramp (36) is adjustable.

13. Device, according to claim 5 or 11 or 12, **characterised in that** it comprises some extension means for said ramp (36).

14. Device, according to any of the claims 5 and from 11 to 13, **characterised in that** the classifying means (37, 38, 39) are movable.

15. Device, according to any of the claims 5 and from 11 to 14, **characterised in that** it comprises at least means for cleaning the ramp (36).

16. Device, according to claim 15, **characterised in that** the cleaning means is a brush.

17. Device, according to claim 15, **characterised in that** the cleaning means are air blowers.

18. Device, according to claim 5 or 11, **characterised in that** at least one out of the slope (31), the curve (33) and the ramp (36) is made, at least partially, with a material that has sliding, anti-friction properties.

19. Device, according to claim 18, **characterised in that** the material with sliding, anti-friction properties is a glass.

20. Device, according to the claim 5 or 11, **characterised in that** it comprises adjustment means (321) for the angle of the slope (31).

21. Device, according to claim 20, **characterised in that** said adjustment means (321) comprise a strip with guide (322) and a passing system (323).

22. Device, according to claim 5 or 11, **characterised in that** it comprises supply means (360) that comprise supply channels (361) that supply the product to a splint (362) that is separated a certain distance from the slope (31), so that said distance is enough to allow the product (32) to pass through the same place.

23. Device, according to claim 22, **characterised in that** the splint (362) is tilted towards the floor.

## Patentansprüche

1. Verfahren zum Abtrennen der Schalen von Kernen oder Früchten, das Folgendes umfasst:
- eine erste Stufe, in der die Kerne oder die Früchte einer Spaltmaschine zugeführt werden, die auf die Schalen der Kerne oder der Früchte einwirkt und diese aufbricht,
**dadurch gekennzeichnet, dass** das Verfahren Folgendes umfasst:
- eine zweite Stufe, in der die aufgebrochenen Schalen der Kerne oder der Früchte in mindestens ein erstes rohrförmiges Rotationssieb (11), mit Wänden, die Perforationen (12) mit V-Grundform oder Modifizierungen davon aufweisen, transportiert werden, um die schalenlosen Kerne oder die schalenlose Früchte hindurchtreten zu lassen und die Kerne und Früchte mit Schalen sowie die nicht aufgebrochenen Kerne und Früchte innerhalb des rotierenden Siebes (11) zurückzuhalten,
- eine dritte Stufe, in der sich das erste Rotationssieb (11) dreht, wobei die Produkte in seinem Inneren bewegt werden, wobei einige der Produkte durch die Perforationen (12) mit V-Grundform oder Modifizierungen davon hindurchtreten und in mehrere Sammeleinrichtungen (13) fallen, und
- eine vierte Stufe, in der die Schalen, die Früchte und die Kerne, die sich von der Schale getrennt haben, und die Früchte und Kerne mit Schalen aus den Sammeleinrichtungen (13) zu mindestens einer Vorrichtung (30) transportiert werden, die eine Schräge (31) aufweist, entlang der die Produkte (32) fallen, wobei die Schräge (31) in einer Kurve (33) mit einem gewellten Bereich (34) und einem Wendepunkt (35) endet, der sie nach oben zu einer Rampe (36) führt, wo die Produkte (32) abgehoben werden, wobei die schalenlosen Kerne oder Früchte auf der einen Seite, die Kerne oder Früchte mit Schalen auf einer anderen Seite und die losen Schalen auf einer weiteren Seite, in entsprechende Sortierungseinrichtungen (37, 38, 39) fallen, basierend auf den Reibungskoeffizienten zwischen den Produkten (32) und dem gewellten Bereich (34).

2. Verfahren nach Anspruch 1, **dadurch gekennzeichnet, dass** zwischen der dritten und vierten Stufe eine dritte Zwischenstufe vorgesehen ist, in der die im Inneren des ersten Rotationssiebs (11) verbleibenden Produkte (32) zu einem zweiten rotationsförmigen Rotations-sieb (14) übertragen werden, das identische oder ähnliche Eigenschaften wie das erste Rotationssieb (11) aufweist, um schalenlose Kerne oder Früchte durchzulassen und die Kerne oder Früchte mit Schalen und die Schalen im Inneren des zweiten Rotationssiebs (14) zurückzuhalten, das die Perforationen (12) mit V-Grundform oder Modifizierungen davon aufweist.

3. Verfahren nach Anspruch 1 oder 2, **dadurch gekennzeichnet, dass** die Rotationssiebe (11, 14) zum Boden hin geneigt werden, entsprechend der Vorschubrichtung der Produkte.

4. Verfahren nach einem der vorhergehenden Ansprüche, **dadurch gekennzeichnet, dass** die rohrförmigen Rotationssiebe (11, 14) zylindrisch sind.

5. Vorrichtung zum Auswählen von Produkten, wie etwa Trockenfrüchten mit Schalen, Kernen oder Hülsenfrüchten (30) mit dem Verfahren gemäß Anspruch 1, wobei die Vorrichtung eine Schräge (31) aufweist, entlang der die schalenlosen Kerne, die Kerne mit Schalen und die Schalen fallen, **dadurch gekennzeichnet, dass** sie Folgendes aufweist:
- eine Kurve (33) am Ende der Schräge (31), wobei die Kurve (33) Folgendes aufweist:
- einen Wendepunkt (35), der die Richtung ändert, um das Produkt (32) abheben zu lassen, und
- mindestens einen gewellten Bereich (34),
- eine Rampe (36), über die die Produkte (32) springen, und
- Sortierungseinrichtungen (37, 38, 39), die die Produkte (32) sortieren, die von der Rampe (36) springen.

6. System zum Trennen der Schalen von Kernen oder Früchten, das eine Vorrichtung nach Anspruch 5 aufweist und ferner mindestens ein rohrförmiges Rotationssieb (11), das einen Einlass (17) und einen Auslass (18) des Siebs bildet, Rotationseinrichtungen (19) auf der Querachse des Siebs (11), Perforationen (12) in der rohrförmigen Wand zum Durchlassen oder Sieben des Produkts und Sammeleinrichtungen (16) für das gesiebte Produkt aufweist, **dadurch gekennzeichnet, dass** die Perforationen (12) eine V-Grundform oder Modifizierungen davon aufweisen.

7. System nach Anspruch 6, **dadurch gekennzeichnet, dass** die inneren Vorsprünge (20) der Perforationen (12) mit V-Grundform oder Modifizierungen davon abgerundet sind.

8. System nach Anspruch 6, **dadurch gekennzeichnet, dass** es ein zweites Rotationssieb (14) aufweist, das unterhalb des ersten Rotationssiebs (11) angeordnet ist, wobei Transporteinrichtungen den Auslass (18) des ersten Rotationssiebs (11) mit dem Einlass (27) des zweiten Siebs verbinden und die Produkte aus dem ersten Siebs (11) in das Innere des zweiten Siebs (14) transportieren.

9. System nach Anspruch 8, **dadurch gekennzeichnet, dass** das erste Sieb (11) und das zweite Sieb (14) an ihrem Ausgang (18, 28) Einrichtungen zum Rückführen der Produkte im Inneren entweder zu einer anderen Vorrichtung oder zu einem vorherigen Siebeingang aufweisen.

10. System nach Anspruch 6 oder 8, **dadurch gekennzeichnet, dass** die Siebe (11, 14) zum Boden hin geneigt sind, entsprechend der Vorschubrichtung der Produkte.

11. Vorrichtung nach Anspruch 5, **dadurch gekennzeichnet, dass** sie eine zweite Vorrichtung (300) aufweist, die über oder unter der Vorrichtung gemäß Anspruch 5 angeordnet ist.

12. Vorrichtung nach Anspruch 5 oder 11, **dadurch gekennzeichnet, dass** der Anstieg und der Winkel der Rampe (36) einstellbar sind.

13. Vorrichtung nach Anspruch 5 oder 11 oder 12, **dadurch gekennzeichnet, dass** die Rampe (36) Verlängerungseinrichtungen aufweist.

14. Vorrichtung nach einem der Ansprüche 5 und 11 bis 13, **dadurch gekennzeichnet, dass** die Sortierungseinrichtungen (37, 38, 39) beweglich ausgebildet sind.

15. Vorrichtung nach einem der Ansprüche 5 und 11 bis 14, **dadurch gekennzeichnet, dass** sie zumindest eine Reinigungseinrichtung für die Rampe (36) aufweist.

16. Vorrichtung nach einem der Ansprüche 15, **dadurch gekennzeichnet, dass** die Reinigungseinrichtung eine Bürste ist.

17. Vorrichtung nach Anspruch 15, **dadurch gekennzeichnet, dass** die Reinigungseinrichtung ein Luftgebläse ist.

18. Vorrichtung nach Anspruch 5 oder 11, **dadurch gekennzeichnet, dass** zumindest eine Baugruppe von der Schräge (31), der Kurve (33) und der Rampe (36) zumindest teilweise aus einem Material besteht, das reibungsmindernde Gleiteigenschaften aufweist.

19. Vorrichtung nach Anspruch 18, **dadurch gekennzeichnet, dass** das Material mit reibungsmindernden Gleiteigenschaften Glas ist.

20. Vorrichtung nach Anspruch 5 oder 11, **dadurch gekennzeichnet, dass** sie Einstelleinrichtungen (321) für den Neigungswinkel (31) aufweist.

21. Vorrichtung nach Anspruch 20, **dadurch gekennzeichnet, dass** die Einstelleinrichtungen (321) ein Band mit einer Führung (322) und ein Durchlaufsystem (323) aufweisen.

22. Vorrichtung nach Anspruch 5 oder 11, **dadurch gekennzeichnet, dass** sie Zuführungseinrichtungen (360) aufweist, die Zuführungskanäle (361) aufweisen, die die Produkte einer Schiene (362) zuführen, die in einem bestimmten Abstand von der Schräge (31) beabstandet ist, so dass dieser Abstand ausreicht, um die Produkte (32) durch dieselbe Stelle hindurchtreten zu lassen.

23. Vorrichtung nach Anspruch 22, **dadurch gekennzeichnet, dass** die Schiene (362) zum Boden hin geneigt ist.

## Revendications

1. Procédure de séparation de l'écale des graines ou des fruits, du type comprenant :
- une première étape où les graines ou les fruits sont introduits dans une machine à fendre, qui frappe ladite écale des graines ou des fruits en la cassant,
**caractérisée en ce qu'**elle comprend :
- une deuxième étape dans laquelle ladite graine ou écale de fruit fendue est transportée dans au moins un premier tamis rotatif (11), qui est tubulaire avec des parois ayant des perforations (12) avec une forme de base en V ou des modifications de celle-ci pour faire passer la graine ou le fruit sans écale et retenir les graines et les fruits avec écales et les graines et les fruits non fendus à l'intérieur du tamis rotatif (11),
- une troisième étape dans laquelle ledit premier tamis rotatif (11) tourne, en déplaçant les produits à l'intérieur de celui-ci, une partie desdits produits passant à travers lesdites perforations (12) avec une forme de base en V ou des modifications de celle-ci, pour tomber dans des moyens de collecte (13), et
- une quatrième étape dans laquelle les écales, les fruits et les graines qui se sont séparés de l'écale et les fruits et les graines avec les écales provenant des moyens de collecte (13) sont transportés vers au moins un dispositif (30) comprenant une pente (31) le long de laquelle lesdits produits (32) tombent, ladite pente (31) se terminant par une courbe (33) avec une zone ondulée (34) et un point d'inflexion (35) qui la guide vers le haut jusqu'à une rampe (36) où lesdits produits (32) décollent, avec lesdits graines ou fruits sans écale tombant dans les éléments de classification respectifs (37, 38, 39) d'un côté, les graines ou fruits avec écale de l'autre et les écales libres de l'autre sur la base du coefficient de frottement desdits produits (32) avec la zone ondulée (34).

2. Procédé, selon la revendication 1, **caractérisé en ce qu'**entre la troisième et la quatrième étape, il y a une troisième étape intermédiaire dans laquelle les produits (32) restant à l'intérieur du premier tamis rotatif (11) sont transférés vers un deuxième tamis rotatif (14) qui est tubulaire avec des caractéristiques identiques ou similaires au premier tamis rotatif (11), passant loin des graines ou des fruits sans écale et retenant les graines ou les fruits avec des écales et les écales à l'intérieur du deuxième tamis rotatif (14), comprenant lesdites perforations (12) avec une forme de base en V ou des modifications de celle-ci.

3. Procédure, selon la revendication 1 ou 2, **caractérisée en ce que** les tamis rotatifs (11, 14) sont inclinés vers le sol suivant le système d'avance des produits.

4. Procédure, selon l'une des revendications précédentes, **caractérisée en ce que** les tamis rotatifs (11, 14) étant tubulaires sont cylindriques.

5. Dispositif de sélection de produits tels que des fruits secs avec écales, des graines ou des légumineuses (30), selon la procédure de la revendication 1, du type comprenant une pente (31) le long de laquelle tombent les graines sans écales, les graines avec écales et les écales, **caractérisé en ce qu'**il comprend :
- une courbe (33) à la fin de la pente (31) comprenant :
• un point d'inflexion (35) qui change de direction en soulevant les produits (32), et
• au moins une zone ondulée (34)
- une rampe (36) où sautent lesdits produits (32)
- des moyens de classification (37, 38, 39) qui classent les produits (32) qui sautent de la rampe (36).

6. Système de séparation de l'écale de graines ou de fruits qui comprend le dispositif de la revendication 5 et comprenant en outre au moins un tamis rotatif (11) étant tubulaire qui définit une entrée (17) et une sortie (18) dudit tamis, des moyens de rotation (19) sur l'axe transversal du tamis (11), des perforations (12) dans la paroi tubulaire passant ou criblant le produit et des moyens de collecte (16) du produit tamisé, **caractérisé en ce que** lesdites perforations (12) ont une forme de base en V ou des modifications de celle-ci.

7. Système selon la revendication 6, **caractérisé en ce que** les saillies intérieures (20) des perforations (12) ayant une forme de base en V ou des modifications de celle-ci sont arrondies.

8. Système selon la revendication 6, **caractérisé en ce qu'**il comprend un second tamis rotatif (14) disposé sous le premier tamis rotatif (11) avec des moyens de transport reliant la sortie (18) du premier tamis rotatif (11) à l'entrée (27) du second tamis, transportant les produits à l'intérieur du premier tamis (11) vers l'intérieur du second tamis (14).

9. Système selon la revendication 8 **caractérisé en ce que** le premier (11) et le second (14) tamis comportent à leur sortie (18, 28) des moyens de renvoi lointain du produit à l'intérieur, soit vers un autre dispositif, soit vers une entrée de tamis précédent.

10. Système selon la revendication 6 ou 8, **caractérisé en ce que** lesdits tamis (11, 14) sont inclinés vers le sol selon le sens d'avancement des produits.

11. Dispositif, selon la revendication 5, **caractérisé en ce qu'**il comprend un second dispositif (300), supérieur ou inférieur à celui décrit dans la revendication 5.

12. Dispositif, selon les revendications 5 ou 11, **caractérisé en ce que** le levage et l'angle de la rampe (36) sont réglables.

13. Dispositif, selon la revendication 5 ou 11 ou 12, **caractérisé en ce qu'**il comprend des moyens d'extension pour ladite rampe (36).

14. Dispositif, selon l'une des revendications 5 et de 11 à 13, **caractérisé en ce que** les moyens de classement (37, 38, 39) sont mobiles.

15. Dispositif, selon l'une des revendications 5 et de 11 à 14, **caractérisé en ce qu'**il comporte au moins des moyens de nettoyage de la rampe (36).

16. Dispositif, selon la revendication 15, **caractérisé en ce que** le moyen de nettoyage est une brosse.

17. Dispositif, selon la revendication 15, **caractérisé en ce que** les moyens de nettoyage sont des souffleurs d'air.

18. Dispositif selon la revendication 5 ou 11, **caractérisé en ce qu'**au moins un des éléments de la pente (31), de la courbe (33) et de la rampe (36) est réalisé, au moins partiellement, avec un matériau ayant des propriétés de glissement et d'antifriction.

19. Dispositif, selon la revendication 18, **caractérisé en ce que** le matériau ayant des propriétés de glissement et d'antifriction est un verre.

20. Dispositif, selon la revendication 5 ou 11, **caractérisé en ce qu'**il comporte des moyens de réglage (321) de l'angle de la pente (31).

21. Dispositif, selon la revendication 20, **caractérisé en ce que** lesdits moyens de réglage (321) comprennent une bande avec guide (322) et un système de passage (323).

22. Dispositif selon la revendication 5 ou 11, **caractérisé en ce qu'**il comprend des moyens d'alimentation (360) qui comprennent des canaux d'alimentation (361) qui fournissent le produit à une planche (362) qui est séparée d'une certaine distance de la pente (31), de sorte que ladite distance est suffisante pour permettre au produit (32) de passer par le même endroit.

23. Dispositif, selon la revendication 22, **caractérisé en ce que** la planche (362) est inclinée vers le sol.
